# DEMANDE DE BREVET EUROPEEN

(11) **EP 2 239 523 A2**
(43) Date de publication de la demande: **13.10.2010**
(21) Numéro de dépôt: 10305294.0
(22) Date de dépôt: 24.03.2010
(51) Int. Cl.: F24H 1/10

(54) **Groupe de production rapide d'eau chaude ou de vapeur**

(30) Priorité: 31.03.2009 FR 0952058
(71) Demandeur: R.E.M., 90800 Bavilliers (FR)
(72) Inventeur: Deichelbohrer, Pascal, 25600 Brognard (FR); Magagna, René, 70400 Chalonvillars (FR)
(74) Mandataire: Rhein, Alain

(57) **Abrégé**

L'invention concerne un groupe (100) de production rapide d'eau chaude ou de vapeur, comportant, à l'intérieur d'au moins une cuve (42), des moyens d'échauffement (40) conçus aptes à être échauffés par des courants de Foucault. Tout particulièrement, les moyens d'échauffement (40) sont constitués par au moins un dispositif (1) comportant des moyens d'entrainement en rotation (2) d'un rotor (4) pourvu en périphérie d'un nombre paire de pôles alternés nord/sud (5 ; 5A) constitués d'aimants permanents en forme de segments semi cylindrique, ce rotor (4) étant monté en rotation à distance d'entrefer (E) déterminé dans l'alésage d'une chemise (8) étanche s'étendant dans ladite cuve (42).

## Description

L'invention concerne un groupe de production rapide d'eau chaude ou de vapeur, comportant à l'intérieur d'au moins une cuve des moyens d'échauffement conçus aptes à être échauffés par des courants de Foucault.

L'invention concerne le domaine de la production de fluide chauffé, en particulier la production d'eau chaude ou de vapeur, pour des utilisations domestiques ou industrielles, en particulier dans le chauffage des locaux.

Par eau chaude on entend toute température supérieure à la température ambiante.

Dans de nombreux cas, il est nécessaire de disposer rapidement d'eau chaude à une température supérieure à la température ambiante d'une valeur de plusieurs dizaines de degrés Celsius, ou de disposer de vapeur surtout pour les applications industrielles.

Les installations classiques de chaudières sont couplées à des moyens de stockage d'eau chaude ou de vapeur, entretenus en température en permanence, même s'il n'y a pas d'utilisation. Une quantité importante d'énergie est alors consommée sans profit pour l'utilisateur.

On recherche, dans les applications domotiques, à économiser l'énergie au niveau des locaux d'habitation et à ne consommer l'énergie que quand on en a réellement besoin.

Des moyens de génération rapide sont connus pour des petits volumes, par exemple sous la forme de chauffe-eau à induction. Toutefois ces systèmes ne sont pas bien adaptés à un gradient important de température pour un volume de plusieurs dizaines de litres ou davantage.

On connaît le principe de l'utilisation des courants de Foucault pour échauffer rapidement un liquide. Ce principe est basé sur la création d'échauffement d'un cylindre métallique parcouru par des champs magnétiques en mouvement. Ces champs magnétiques sont produits par la rotation d'un organe pourvu d'aimants permanents à l'intérieur ou à l'extérieur de ce cylindre métallique. L'échange de calories se fait par circulation d'un liquide caloporteur, notamment de l'eau ou de l'huile, selon les utilisations, en contact avec la partie métallique échauffée.

On connaît ainsi un document FR 2514966, qui décrit un convertisseur comprenant un rotor magnétique entraîné par un arbre en rotation, et un échangeur de chaleur à parois électro-conductrices dans lequel circule un fluide. On connaît encore le document WO 9746051, qui concerne une chaudière comprenant une chambre de chauffage pourvue d'un tube d'entrée, d'un tube de sortie, et au moins une surface transmettant la chaleur au fluide à chauffer. Cette surface est formée par un tambour métallique chauffé par des courants de Foucault induits par un cylindre rotatif monté dans le tambour et recouvert extérieurement d'une pluralité d'aimants permanents.

Il est encore connu par le document EP-A-1.130.336 un appareil de chauffage de fluides à haut rendement, comportant une pompe dont le moteur électrique entraîne une roue à aubes logée dans un carter de section adaptée comportant une entrée de fluide radiale et une sortie axiale. Contre l'une des parois de ce carter par ailleurs métallique, sont appliquées les spires d'une bobine reliée à un générateur à haute fréquence. Sous l'effet de l'échauffement de cette bobine alimentée par le générateur à haute fréquence, la paroi métallique contre laquelle elle est appliquée s'élève en température en chauffant, du même coup, le fluide traversant la pompe.

On connaît également par le document US2008/0011336 un dispositif de chauffage par induction pour chauffer de l'eau purifiée, ceci sans la contamination. Il comporte une chambre de chauffe sous forme d'un tube en téflon dans laquelle est monté, concentriquement, un cylindre récepteur, dit « suscepteur » constitué en un matériau retenu pour sa capacité à absorber de l'énergie électromagnétique et la convertir en chaleur. Le tube de chauffe en téflon est raccordé à ses extrémités, respectivement à une entrée d'eau à chauffer et à une sortie d'eau chauffée. Extérieurement à la chambre de chauffe est enroulée une bobine d'induction sous forme d'un tube en cuivre à refroidissement par eau.

Toutefois les systèmes connus ne sont pas optimisés pour l'obtention d'un gradient rapide d'élévation de température. Ils sont souvent surdimensionnés, ce qui amène une surconsommation inutile d'énergie et crée des problèmes de couple résistant excessif.

La nécessité d'offrir, pour des applications domestiques, des équipements de coefficient de performance, dit COP, élevé, et de coût inférieur à d'autres solutions peu gourmandes en énergie telles que les pompes à chaleur ou encore els chaudières à condensation, impose une mise au point précise quant aux dimensionnements des constituants, à leur domaine d'utilisation. Il est, encore, nécessaire de pouvoir proposer, en particulier pour les applications domestiques, un équipement standardisé avec un modèle unique de moyens d'entraînement, qu'on puisse s'adapter au dimensionnement de l'installation avec un nombre réduit de réglages.

L'invention a pour but de pallier les inconvénients de l'état de la technique en proposant un dispositif optimisé comportant des moyens d'entraînement du dimensionnement le plus faible possible, capable d'élever en moins de dix minutes la température d'un volume d'eau de 80 litres de 40 degrés Celsius.

A cet effet, l'invention concerne un groupe de production rapide d'eau chaude ou de vapeur, comportant, à l'intérieur d'au moins une cuve, des moyens d'échauffement conçus aptes à être échauffés par des courants de Foucault, **caractérisé en ce que** les moyens d'échauffement sont constitués par au moins un dispositif comportant des moyens d'entrainement en rotation d'un rotor pourvu en périphérie d'un nombre paire de pôles alternés constitués d'aimants permanents en forme de segments semi cylindrique, ce rotor étant monté en rotation à distance d'entrefer déterminé dans l'alésage d'une chemise étanche s'étendant dans ladite cuve.

Selon une caractéristique de l'invention, lesdits moyens d'échauffement sont complétés par au moins une bobine d'induction en périphérie de ladite cuve, extérieurement ou encastrée dans une paroi de cette dernière, bobine face à laquelle est disposée, à l'intérieur de ladite cuve, au moins une plaque.

D'autres caractéristiques et avantages de l'invention ressortiront de la description détaillée qui va suivre des modes de réalisation non limitatifs de l'invention, en référence aux figures annexées dans lesquelles:
- la figure 1 représente, de façon schématisée et en section longitudinale, un groupe selon l'invention;
- la figure 2 représente, de façon schématisée et en élévation, une variante d'un groupe selon l'invention, dans un circuit de chauffage;
- la figure 3 est une vus similaire à la figure 1 et illustrant un groupe selon l'invention sous une autre forme de réalisation ;
- la figure 4 représente, de façon schématisée et en coupe transversale, un rotor équipant le dispositif de la figure 3 ;
- la figure 5 représente, de façon schématisée, un circuit comportant le dispositif de la figure 3 ;
- la figure 6 est une courbe de température en fonction du temps dans un dispositif de la figure 3 ;
- la figure 7 est une courbe de coefficient de performance en fonction du régime de rotation du rotor d'un dispositif de la figure 3.

L'invention concerne le domaine de la production d'eau chaude ou de vapeur, pour des utilisations domestiques ou industrielles, en particulier dans le chauffage des locaux.

L'invention met en oeuvre un moyen innovant de production économique et très rapide d'eau chaude ou de vapeur.

Un mode préféré de réalisation de l'invention est illustré sur les figures.

L'invention concerne un groupe 100 de production rapide d'eau chaude ou de vapeur. Ce groupe 100 comporte au moins une cuve 42 contenant ou conçue apte à contenir un fluide, notamment de l'eau ou/et de la vapeur, ou tout autre fluide caloporteur, sous forme liquide ou/et gazeuse. Naturellement le groupe 100 peut comporter une pluralité de cuves en série ou/et en parallèles les unes avec les autres.

Selon l'invention, le groupe 100 comporte, à l'intérieur d'une telle cuve 42 des moyens d'échauffement 40 conçus aptes à être échauffés par des courants de Foucault créés par au moins une bobine d'induction 41, préférentiellement alimentée par un circuit électronique de puissance.

Ces moyens d'échauffement 40 sont constitués par un dispositif 1 qui est lui-même conçu apte à générer, seul, un rapide gradient de température de fluide. Ainsi, ce dispositif 1 comporte des moyens d'entrainement 2 en rotation d'un rotor 4 autour d'un axe de rotation 3. Ce rotor 4 est pourvu en périphérie d'un nombre paire de pôles alternés Nord/Sud 5, 5A, constitués d'aimants permanents en forme de segments d'aimant semi cylindrique. Ce rotor 4 est monté en rotation de manière coaxiale et à distance d'entrefer E déterminé dans l'alésage 7 d'une chemise 8 étanche s'étendant dans ladite cuve 42. Ainsi, cette chemise 8, comportant, préférentiellement, une paroi 32 d'épaisseur constante, délimite par rapport aux parois internes de la cuve 42 une chambre 9 conçue apte à contenir de l'eau ou de la vapeur, et qui peut être reliée à des moyens de circulation 10 d'eau ou de vapeur conçus aptes à alimenter un circuit d'utilisation quelconque de ce fluide caloporteur.

En effet, la variation d'un champ magnétique dans un tube métallique génère de forts dégagements de chaleur. Le champ magnétique est généré par les aimants permanents, tournant dans une chemise métallique. Il convient d'observer qu'il peut encore être envisagé de faire tourner la chemise métallique autour des aimants permanents, donc du rotor tel que défini plus haut, mais qui est alors fixe, ceci sans que l'on s'écarte de l'esprit de la présente invention.

Quoiqu'il en soit les échauffements ainsi obtenus sont très importants.

Si un fluide caloporteur est en contact avec le tube métallique, alors les calories produites peuvent être transportées pour alimenter un dispositif de chauffage ou une réserve d'eau sanitaire.

De manière complémentaire, les moyens d'échauffement 40 du groupe 100 selon l'invention peuvent comporter au moins une bobine d'induction 41 ménagée en périphérie de la cuve 42. Cette bobine d'induction 41 peut être, selon le cas, encastrée dans une paroi 45 de la cuve 42, ou disposée, à son voisinage, à l'extérieur de cette dernière. De façon avantageuse, face à cette bobine 41, on dispose, à l'intérieur de la cuve 42, au moins une plaque d'échauffement 44. Naturellement, la morphologie de la plaque 44 ne doit pas être interprétée de façon restrictive : selon le cas d'espèce, et en particulier selon la forme de la bobine d'induction 41 en regard, et selon la forme de la cuve 42, cette plaque 44 peut prendre différentes géométries, elle peut notamment ne pas être plane, elle peut comporter des ouvertures ou/et des canaux de circulation de fluide, elle peut encore être constituée d'une pluralité d'éléments, joints ou disjoints.

Pour une efficacité maximale, la plaque 44 est située à distance de la face interne de la paroi 45 de la cuve 42 en périphérie de laquelle est disposée la bobine d'induction 41 en regard de la plaque considérée.

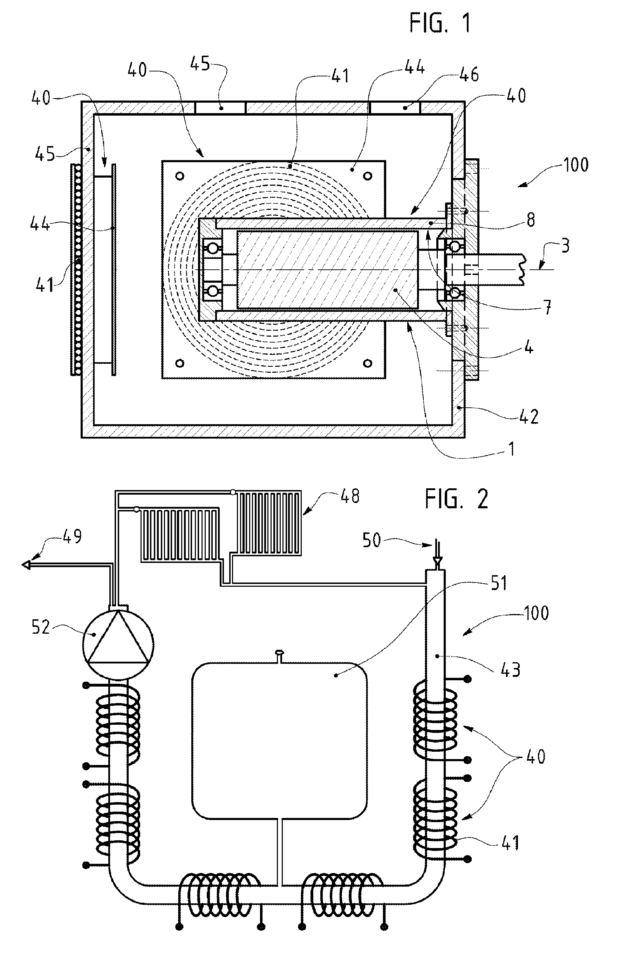

Dans l'exemple de réalisation particulièrement économique illustré dans la figure 1, la cuve 42 est prismatique, et des plaques 44 sont disposées face à chacune de ses faces intérieures. Dans cet exemple non limitatif les plaques 44 sont planes et rectangulaires ou carrées. Le fluide caloporteur circule entre au moins une entrée 46 et au moins une sortie 47 ménagées au niveau de la paroi 45 de la cuve 42.

La figure 2 illustre une variante, dans laquelle le groupe 100 est intégré à un circuit de chauffage comportant une canalisation 43 comportant, éventuellement, un vase d'expansion 51 et un accélérateur 52 et à laquelle sont raccordées, par exemple des radiateurs 48, ou/et au moins une sortie 49 et au moins un retour 50 d'une installation de plancher chauffant ou similaire.

A ce propos, les moyens d'échauffement 40 peuvent encore être complétés par une ou plusieurs bobines d'induction 41 entourant au moins une portion de canalisation 43. Ces bobines d'induction 41 sont de préférence alimentées par un circuit d'électronique de pilotage et de puissance, de 20000 à 40000 Hz.

Le groupe de production rapide d'eau chaude ou de vapeur consiste à mettre en oeuvre un champ magnétique généré par des aimants permanents en mouvement. Ce mouvement peut être obtenu par l'utilisation des énergies renouvelables telles que l'éolien, ou la force hydro motrice, ou similaire.

L'avantage de l'utilisation de l'énergie éolienne est la capacité de générer des calories le jour, mais aussi la nuit et par mauvais temps.

Une source d'énergie traditionnelle telle que l'électricité pour l'entraînement d'un petit moteur électrique peut être également utilisée.

Il est possible d'associer les deux énergies, renouvelable et électrique, ce qui donne au système selon l'invention souplesse, fiabilité et autonomie.

De façon préférée, l'énergie nécessaire à la rotation de l'organe aimanté peut être d'origine électrique ou d'origine naturelle, grâce à une source d'énergie renouvelable, telle que l'énergie d'origine éolienne.

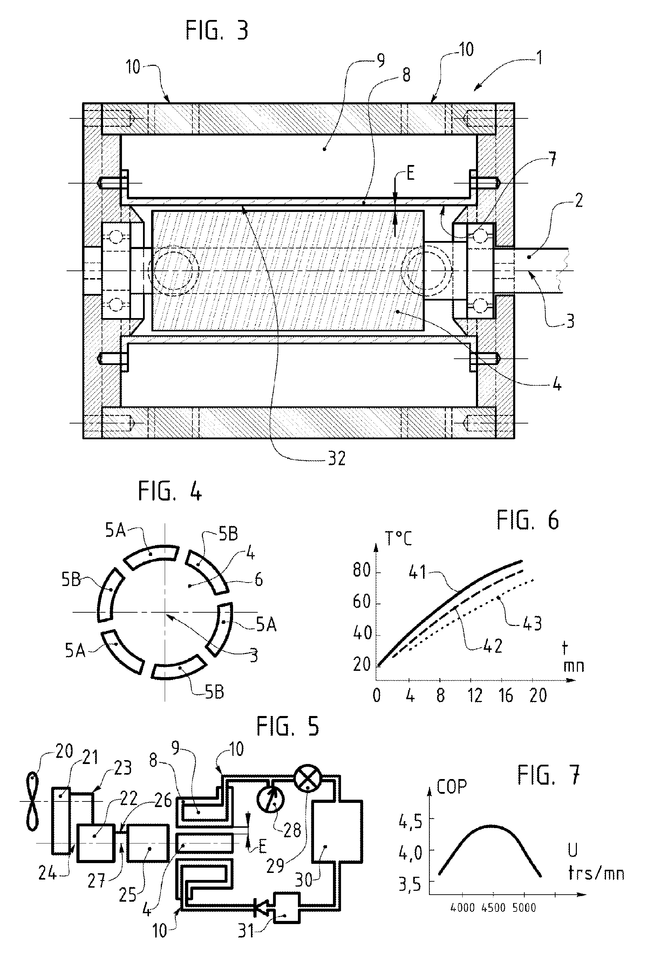

Dans un mode de réalisation avantageux de l'invention utilisant les énergies renouvelables, tel que visible sur la figure 3, les moyens d'entrainement en rotation 2 du rotor 4 comporte une éolienne 20, laquelle peut être prévue pour assurer cet entrainement de manière directe, éventuellement au travers de moyens de transmission adaptés intégrant, le cas échéant, des moyens réducteurs ou démultiplicateurs. Cette éolienne 20 peut encore être couplée à des moyens 21 de transformation d'énergie mécanique en énergie électrique, laquelle peut, selon le cas, être stockée par des accumulateurs 22 grâce à un raccordement 23 adéquat à ces derniers, eux même reliés par une connexion 26 à un moteur électrique d'entrainement 25 dudit rotor 4. A noter que de tels moyens 21 de transformation d'énergie mécanique en énergie électrique peuvent éventuellement être reliés directement à un tel moteur d'entrainement 25. Un tel montage électrique peut évidemment être piloté par une unité de gestion de fonctionnement de l'ensemble, intégrant, par exemple, un variateur de vitesse, un régulateur de puissance, une horloge, etc...

Dans la version préférée de transfert électrique de l'énergie, le variateur gère l'entraînement du moteur électrique 25 par voie électrique. Le moteur électrique 25 entraîne le rotor 4.

Les courants de Foucault chauffent l'eau contenue dans la chambre 9, entre la cuve 40 et la chemise 8, les moyens de circulation 10 la conduisent au réseau d'utilisation, comportant classiquement des instruments 28 de mesure de grandeurs physiques, notamment température et pression, un accélérateur 29 facultatif, un réservoir 30 et un vase d'expansion 31, ce dernier de préférence taré à 1,5 bar maximum, le circuit étant un circuit fermé bouclé sur la chambre 9.

L'invention peut tout aussi bien être mise en oeuvre par alimentation du moteur électrique 25 depuis le réseau. Cette solution est utilisable dans tout type de bâtiment sans nécessiter aucune infrastructure particulière, et, consommant peu d'énergie tout en fournissant un gradient extrêmement rapide de température. Elle est vouée à une large diffusion.

Dans une utilisation domestique traditionnelle, il faut 3h00 à un chauffe-eau de 2000W pour élever 1201 d'eau à la température de 65°C, depuis la température ambiante.

En utilisant un groupe selon l'invention on estime diviser au moins par deux le temps de chauffe et la consommation électrique.

L'intérêt majeur de l'invention est de procurer une économie d'énergie conséquente, du fait non seulement des rendements élevés constatés, mais aussi, de la compatibilité facile avec des dispositifs simples d'énergies renouvelables.

Le gain de place est un autre avantage important de l'invention, qui permet, avec une installation de volume très compact, d'atteindre les résultats souhaités. A ce dimensionnement réduit s'associe tout naturellement une économie sur le coût des matériels utilisés.

L'invention permet d'envisager une grande diversité d'applications, partout où il est nécessaire de disposer à bref délai d'eau chaude, voire de vapeur. On retiendra, de façon non limitative, le sanitaire, le chauffage de l'habitat, les piscines, ainsi que des applications industrielles, pour le chauffage de locaux ou pour la mise en oeuvre de procédés de fabrication.

De façon préférée, pour pallier les problèmes de couple résistant important, qui sont un frein à l'utilisation des technologies à courants de Foucault en chauffage domestique ou industriel, car ils contraignent à un surdimensionnement des moteurs, l'invention met en oeuvre, de façon innovante, une chemise 8 réalisée dans un alliage léger, tel qu'alliage d'aluminium ou de cuivre.

Des essais comparatifs ont été effectués pour déterminer sous quelles conditions la mise en oeuvre de l'invention permet d'obtenir le meilleur COP, c'est-à-dire le meilleur coefficient de performance, selon la définition adoptée par les chauffagistes.

Les essais comparatifs sur le nombre de pôles du rotor ont montré un fonctionnement optimal avec un nombre de pôles bas, dans les conditions recherchées qui sont celles d'une installation de chauffage d'une puissance de quelques kW, et en particulier avec un rotor 4 comportant six pôles. A titre de comparaison, la consommation, dans des conditions particulières identiques, d'un rotor en 8 pôles est de 1180W, alors quelle n'est que de 600W en 6 pôles. Il est recherché en permanence le dimensionnement le plus faible possible du moteur 25, de façon à réduire son coût, mais aussi sa consommation à vide, dans l'hypothèse, non déraisonnable, d'un entraînement permanent de ce moteur.

La courbe de la figure 5 montre que, toutes choses égales par ailleurs, le COP obéit à une loi d'allure gaussienne, en cloche, avec un maximum à une température donnée.

Le figure 4 montre des essais pratiqués avec un rotor à six pôles de diamètre 66 mm, une longueur de recouvrement entre rotor et chemise de 146 mm en regard de la chemise 8, un entrefer E de 1,5 mm.

La courbe 41 est réalisée avec une chemise 8 d'épaisseur de paroi interne 32 de 8mm, et à un régime de rotation du rotor de 5000 trs/mn. La consommation du moteur est de 3,2A, la puissance consommée est de 1774W, pour l'ensemble du moteur et de l'installation. Le COP calculé est de 4,0.

La courbe 42 correspond au même rotor, mais à un régime de rotation de 4500 trs/mn. La consommation du moteur est de 2,45A, la puissance consommée est de 1347W, pour l'ensemble du moteur et de l'installation. La COP calculé est de 4,5.

On a donc un meilleur rendement énergétique, même si le gradient de température, tel que visible sur la courbe, est légèrement inférieur à celui de la courbe 41, tout en restant excellent, puisque, dans l'exemple de la figure 4, pour un circuit de 80 litres environ, on obtient un gradient de température de 40°C en environ 12 minutes.

La courbe 43 correspond au même rotor, mais à un régime de rotation de 4500 trs/mn, et avec une chemise 8 d'épaisseur de paroi interne 32 de 4mm. La consommation du moteur est de 2,15A, la puissance consommée est de 1200W, pour l'ensemble du moteur et de l'installation. La COP calculé est de 4,0.

Le meilleur compromis, dans cet exemple, est celui de la courbe 42, avec une vitesse de rotation optimisée à 4500 trs/mn, une épaisseur de chemise forte, supérieure à 5 fois la valeur de l'entrefer E. De façon préférée, l'épaisseur de la paroi 32 est comprise entre 1 et 6 fois la valeur de l'entrefer E.

On peut comparer ces COP de 4,0 à 4,5 aux valeurs de COP de 2 à 6 que permettent d'obtenir, mais de façon irrégulière et très dépendante des températures externes, des pompes à chaleur.

De préférence les moyens d'entraînement sont définis apte à entraîner le rotor 4 à une vitesse comprise entre 4000 et 4500 tours par minute.

De façon avantageuse, ces pôles 5 s'étendent chacun radialement sur une épaisseur comprise entre 1 et 3 fois la valeur de l'entrefer E, et sont séparés les uns des autres par une distance comprise entre 0,5 et 3 fois la valeur de cet entrefer.

Dans le cas préféré de l'utilisation d'une éolienne 20, pour une utilisation domestique, cette éolienne 20 est à axe horizontal et installée entre des ouvertures ménagées en toiture dans deux pignons d'un bâtiment exposés aux vents dominants. Outre l'absence de superstructures souvent considérées comme inesthétiques, cette solution présente l'avantage d'utiliser des volumes morts d'un bâtiment. L'orientation de la toiture face au soleil permet de l'utiliser avec des panneaux solaires ou photovoltaïques pour emmagasiner de l'énergie thermique, les pignons sont alors classiquement soumis aux vents dominants, et ces façades froides trouvent ainsi une utilité dans le rendement énergétique du bâtiment.

Pour une utilisation domestique, telle que dimensionnée lors des essais de la figure 4, soit un circuit de 80 litres correspondant à environ 8 radiateurs de chauffage central usuels, l'éolienne a une puissance inférieure ou égale à 2kW et fournit l'énergie de chauffage d'un circuit d'utilisation d'eau de volume inférieur à 100 litres.

Dans l'application particulière au chauffage de l'eau d'une piscine, on peut utiliser avec profit le moteur du groupe de filtration, qui fonctionne de façon quasi permanente, comme moyen d'entraînement du dispositif selon l'invention.

## Revendications

1. Groupe (100) de production rapide d'eau chaude ou de vapeur, comportant, à l'intérieur d'au moins une cuve (42), des moyens d'échauffement (40) conçus aptes à être échauffés par des courants de Foucault, **caractérisé en ce que** les moyens d'échauffement (40) sont constitués par au moins un dispositif (1) comportant des moyens d'entrainement en rotation (2) d'un rotor (4) pourvu en périphérie d'un nombre paire de pôles alternés nord/sud (5 ; 5A) constitués d'aimants permanents en forme de segments semi cylindrique, ce rotor (4) étant monté en rotation à distance d'entrefer (E) déterminé dans l'alésage d'une chemise (8) étanche s'étendant dans ladite cuve (42).

2. Groupe (100) selon la revendication 1, **caractérisé en ce que** ladite chemise (8) délimite dans la cuve (42) au moins une chambre (9) conçue apte à contenir de l'eau ou de la vapeur et reliée à des moyens de circulation (10) d'eau ou de vapeur conçus aptes à alimenter un circuit d'utilisation,

3. Groupe (100) selon l'une des revendications précédentes, **caractérisé par le fait que** la chemise (8) comporte une paroi (32) d'épaisseur constante comprise entre 1 et 6 fois la valeur dudit entrefer (E).

4. Groupe (100) selon l'une des revendications précédentes, **caractérisé par le fait que** ladite chemise (8), est en alliage léger.

5. Groupe (100) selon l'une des revendications précédentes, **caractérisé par le fait que** ledit rotor (4) comporte six pôles (5 ; 5A) et que lesdits moyens d'entraînement (2) sont conçus aptes à l'entraîner à une vitesse comprise entre 4000 et 4500 tours par minute, et que lesdits pôles (5 ; 5A) s'étendent radialement sur une épaisseur comprise entre 1 et 3 fois la valeur dudit entrefer (E), et sont séparés les uns des autres par une distance comprise entre 0,5 et 3 fois la valeur dudit entrefer (E).

6. Groupe (100) selon l'une des revendications précédentes, **caractérisé en ce que** moyens d'échauffement sont complétés par au moins une bobine d'induction (41) en périphérie de ladite cuve (42), extérieurement ou encastrée dans une paroi (45) de cette dernière, bobine (41) face à laquelle est disposée, à l'intérieur de ladite cuve (42), au moins une plaque(44).

7. Groupe (100) selon la revendication 6, **caractérisé par le fait que** ladite plaque (44) est située à distance de la face interne de ladite paroi (45).

8. Groupe (100) selon l'une des revendications précédentes, **caractérisé par le fait que** lesdits moyens d'entraînement (2) comportent une éolienne (20).

9. Groupe (100) selon la revendication 8, **caractérisé par le fait que** l'éolienne (20) entraine directement le rotor (4), le cas échéant au travers de moyens de transmission adaptés comportant des moyens réducteurs ou démultiplicateurs.

10. Groupe selon la revendication 8, **caractérisé par le fait que** ladite éolienne (20) est couplée à des moyens (21) de transformation d'énergie mécanique en énergie électrique, pour l'alimentation d'un moteur électrique (25) d'entrainement dudit rotor (4) directement ou par des accumulateurs (22) auquel est raccordé ce dernier ainsi que les dits moyens (21).

11. Groupe selon l'une des revendications 8 à 10, **caractérisé par le fait que** ladite éolienne (20) est à axe horizontal et installée entre des ouvertures ménagées en toiture dans deux pignons d'un bâtiment exposés aux vents dominants.
